# EUROPEAN PATENT APPLICATION

(11) **EP 4 400 458 A1**
(43) Date of publication of application: **17.07.2024**
(21) Application number: 23847635.2
(22) Date of filing: 20.04.2023
(51) Int. Cl.: B65G 47/90, B65G 47/248

(54) **PICKUP TOOL**

(30) Priority: 30.11.2022 CN 202223197919 U
(71) Applicant: Contemporary Amperex Technology Co., Limited, Ningde, Fujian 352100 (CN)
(72) Inventor: LUO, Jie, Ningde, Fujian 352100 (CN); YU, Dingshan, Ningde, Fujian 352100 (CN); WU, Ying, Ningde, Fujian 352100 (CN); LUO, Jian, Ningde, Fujian 352100 (CN)
(74) Representative: Ran, Handong
(86) International application number: PCT/CN2023/089583
(87) International publication number: WO 2024/113653

(57) **Abstract**

Embodiments of the present application provide a pickup tooling, which relate to the field of pickup devices. The pickup tooling includes a base and a pickup mechanism. A mounting portion is arranged on one side of the base in a first direction, and the mounting portion is used for connecting an execution end of the robot. The pickup mechanism includes a mounting seat, a pickup unit, and a driving mechanism. The mounting seat is connected to the base, and the pickup unit is connected to the mounting seat in a turnable manner and is used for picking up a workpiece. The driving mechanism is configured to drive the pickup unit to rotate about a central axis to change the posture of the pickup unit, with the central axis perpendicular to the first direction. The pickup unit is turnable about the central axis and connected to the mounting seat. When picking up the workpieces, the pickup unit is capable of turning to pick up workpieces with different postures, thereby improving the compatibility of the pickup tooling.

## Description

### Cross-Reference to Related Application

The present application claims priority to Chinese Patent Application NO. 202223197919.3 filed on November 30, 2022 and entitled "PICKUP TOOLING," which is incorporated herein by reference in its entirety.

### Technical Field

The present application relates to the field of pickup devices, and in particular, to a pickup tooling.

### Background Art

Pickup tooling is a device applied to a robot, and the robot picks up and places workpieces through the pickup tooling.

A conventional pickup tooling has the disadvantage of poor compatibility and can only pick up workpieces with a specific pose. If the posture of a workpiece changes, the pickup tooling cannot stably grip the workpiece. Therefore, improving the compatibility of the pickup tooling with workpiece postures is an urgent technical issue that needs to be addressed.

### Summary of the Invention

Embodiments of the present application provide a pickup tooling, and the pickup tooling is capable of picking up workpieces of different postures, thereby improving the compatibility of the pickup tooling with workpiece postures.

The embodiments of the present application provide a pickup tooling, including a base and a pickup mechanism. A mounting portion is arranged on one side of the base in a first direction, and the mounting portion is used for connecting an execution end of the robot. The pickup mechanism includes a mounting seat, a pickup unit, and a driving mechanism. The mounting seat is connected to the base, and the pickup unit is connected to the mounting seat in a turnable manner and is used for picking up a workpiece. The driving mechanism is configured to drive the pickup unit to rotate about a central axis to change the posture of the pickup unit, with the central axis perpendicular to the first direction.

In the above solution, the base is connected to the robot through the mounting portion, and the robot is capable of adjusting a position of the pickup mechanism connected to the base, so that the pickup mechanism is capable of picking up the workpieces. The pickup unit is turnable about the central axis and connected to the mounting seat. When picking up the workpieces, the pickup unit is capable of turning under the action of the driving mechanism to change the posture of the pickup unit and pick up workpieces with different postures, thereby improving the compatibility of the pickup tooling.

In some embodiments, the pickup unit has a first limit position and a second limit position, and the pickup tooling further includes a position-limit mechanism, and the position-limit mechanism is configured to limit the pickup unit from turning between the first limit position and the second limit position.

In the above solution, the turning of the pickup unit is limited by the position-limit mechanism, which on the one hand reduces the risk of damage to the pickup tooling caused by excessive turning of the pickup unit. On the other hand, when the pickup unit reaches the first limit position or second limit position, the pickup unit may be in a corresponding posture, which is convenient for quickly switching a working state of the pickup unit and improving the pickup efficiency.

In some embodiments, the first limit position is 90° away from the second limit position.

In the above solution, when the first limit position is 90° away from the second limit position, postures of the pickup unit at the first limit position and the second limit position are significantly different, which increases the applicability of the pickup unit.

In some embodiments, the position-limit mechanism is mounted on the mounting seat, and the position-limit mechanism has a first position-limit portion and a second position-limit portion. The pickup mechanism further includes a connecting component fixedly connected to the pickup unit, and the connecting component is configured to: press against the first position-limit portion when the pickup unit is located at the first limit position; and press against the second position-limit portion when the pickup unit is located at the second limit position.

In the above solution, the connecting component cooperates with the first position-limit portion and the second position-limit portion to limit the turning of the pickup unit at the first limit position and second limit position, thereby reducing the possibility of direct collision between the pickup unit and the first position-limit portion and second position-limit portion, and reducing the risk of damage to the pickup unit.

In some embodiments, the connecting component is rotatably arranged on the mounting seat, and an axis of the connecting component rotating with respect to the mounting seat coincides with the central axis.

In the above solution, by rotatably connecting the connecting component to the mounting seat, on the one hand, the mounting seat is capable of supporting the connecting component and reduce the risk of damage when the connecting component presses against the first position-limit portion and the second position-limit portion. On the other hand, the connecting component is further connected to the pickup unit, so that the connecting component is capable of playing a transmission role. By driving the connecting component to rotate, the pickup unit can be driven to rotate.

In some embodiments, the driving mechanism is connected to the connecting component, and the driving mechanism is used for driving the connecting component to swing.

In the above solution, the driving mechanism drives the connecting component to drive the pickup unit to rotate, which on the one hand reduces the risk of damage to the pickup unit caused by a torque of the driving mechanism directly acting on the pickup unit. On the other hand, the position of the driving mechanism does not need to be limited to the position of the pickup unit, so that it is easy to arrange the position of the driving mechanism reasonably.

In some embodiments, the pickup mechanism further includes a connecting component fixedly connected to the pickup unit, and the connecting component is rotatably arranged on the mounting seat. An axis of the connecting component rotating with respect to the mounting seat coincides with the central axis, the driving mechanism is connected to the connecting component, and the driving mechanism is used for driving the connecting component to swing.

In the above solution, the driving mechanism drives, through the connecting component, the pickup unit to rotate, which reduces the risk of damage to the pickup unit caused by the torque of the driving mechanism directly acting on the pickup unit. It is convenient to arrange positions of the driving mechanism and the connecting component with respect to the mounting seat.

In some embodiments, the mounting seat is arranged on the base to be adjustable in position in a second direction, and the second direction is perpendicular to the first direction.

In the above solution, by arranging the mounting seat on the base to be adjustable in position, the position of the pickup unit with respect to the base is adjustable. The position of the pickup unit with respect to the base is adjusted so that the pickup unit is capable of being aligned with a workpiece, thereby reducing the risk of misalignment between the pickup unit and the workpiece causing inability of the pickup unit picking the workpiece.

In some embodiments, the second direction is perpendicular to the central axis.

In the above solution, the second direction is perpendicular to the central axis, so that when the pickup unit turns, the pickup unit will not deflect, and therefore, after the posture adjustment of the pickup unit is completed, the workpiece can be clamped, thereby improving the work efficiency.

In some embodiments, the pickup tooling includes an adjustment mechanism and two pickup mechanisms. The adjustment mechanism is mounted on the base, the mounting seat is connected to the adjustment mechanism, and the adjustment mechanism is used for adjusting a distance between the mounting seats of the two pickup mechanisms in the second direction.

In the above solution, the pickup tooling includes two pickup mechanisms, which increases the number of workpieces that can be picked up by the pickup tooling at a single time and improves the work efficiency. The pickup tooling includes two pickup mechanisms, so that the pickup tooling is further capable of being applicable to a use scenario with a plurality of conveying lines arranged in parallel. By adjusting positions of the two pickup mechanisms by the adjustment mechanism, the pickup units of the pickup mechanisms are capable of accurately picking up workpieces on the plurality of conveying lines.

In some embodiments, the adjustment mechanism includes two sliders and a conveyor belt. The sliders are slidably connected to the base in the second direction. Each slider is connected to a mounting seat. The conveyor belt has a first transmission part and a second transmission part that move in opposite directions in the second direction. The two sliders are respectively connected to the first transmission part and the second transmission part.

In the above solution, when the conveyor belt rotates, the first conveying portion and the second conveying portion move in a straight line in the second direction, and the two have opposite moving directions. The two pickup mechanisms may be closed or separated under the action of the first conveying portion and the second conveying portion, thereby achieving the objective of adjusting the distance between the two pickup mechanisms in the second direction. Driving the two pickup mechanisms through the conveyor belt has the advantage of a large adjustment range, thereby increasing the travel of the pickup mechanism.

In some embodiments, the adjustment mechanism further includes a first pulley and a second pulley which are both rotatably connected to the base and are arranged in the second direction, and the conveyor belt is wound around the first pulley and the second pulley.

In the above solution, the first pulley and the second pulley can both play a driving role, so that the conveyor belt is capable of moving. The first pulley and the second pulley straighten the conveyor belt, so that the conveyor belt is capable of forming the first conveying portion and the second conveying portion.

In some embodiments, the pickup unit includes a turning seat, a clamping assembly, and an adjustment assembly. The turning seat is rotatably connected to the mounting seat about the central axis, and the clamping assembly includes a first clamping portion and a second clamping portion arranged opposite to each other in a third direction. The adjustment assembly is mounted on the turning seat, and the adjustment assembly is configured to adjust a distance between the first clamping portion and the second clamping portion in the third direction, so that the first clamping portion and the second clamping portion cooperate to clamp a workpiece.

In the above solution, the adjustment assembly is mounted on the turning seat and the clamping assembly is connected to the adjustment assembly; therefore, when the turning seat is turned, the clamping assembly is also turned together, so that the posture of the clamping assembly is capable of being adjusted, thereby improving the compatibility of the clamping assembly with workpiece postures.

In some embodiments, the adjustment assembly includes a driving member and a first moving member, the driving member is mounted on the turning seat and has a first output end. The first moving member is connected to the first output end, and the driving member is configured to drive the first moving member to move in the third direction. In the third direction, the first clamping portion is movably arranged on the turning seat, and the first clamping portion is connected to the first moving member through an elastic member.

In the above solution, the elastic member can play a compensation role on the one hand, thereby reducing the risk that the first clamping portion and the second clamping portion cannot clamp a workpiece because the workpiece is too small. On the other hand, the elastic member may also play a protective role, thereby reducing the risk of damage to the workpiece due to an excessive force.

In some embodiments, the driving member has a second output end opposite to the first output end in the third direction, the second clamping portion is movably arranged on the turning seat in the third direction, and the second clamping portion is connected to the second output end.

In the above solution, the first clamping portion and the second clamping portion are capable of being closed or separated with each other under the action of the driving member. When clamping the workpiece, both the first clamping portion and the second clamping portion are capable of providing a clamping force, thereby improving the stability of the clamping assembly clamping the workpiece and reducing the risk of falling off of the clamped workpiece.

In some embodiments, the pickup mechanism includes a plurality of clamping assemblies, and the first clamping portions of the plurality of clamping assemblies correspond to one first moving member.

In the above solution, the first clamping portions of the plurality of clamping assemblies correspond to one first moving member, which on the one hand enables the plurality of clamping assemblies to be capable of synchronously clamping a workpiece, thereby reducing the risk that some clamping assemblies are capable of clamping the workpiece tightly and some clamping assemblies are incapable of clamping the workpiece tightly due to asynchronous movement of the various first clamping portions. On the other hand, it enables the plurality of clamping assemblies to be capable of sharing a driving member, thereby reducing the manufacturing cost of the pickup tooling, simplifying the structure of the pickup tooling, and improving the reliability of the pickup tooling.

In some embodiments, in the third direction, a first cushion pad is arranged on one side of the first clamping portion facing the workpiece; and/or, in the third direction, a second cushion pad is arranged on one side of the second clamping portion facing the workpiece.

In the above solution, when only the first clamping portion is provided with the first cushion pad, it not only enables the first cushion pad to be capable of playing a buffering protection role, but also saves the second cushion pad and reduces the manufacturing cost of the pickup tooling. When the first clamping portion is provided with the first cushion pad and the second clamping portion is provided with the second cushion pad, both sides of the workpiece in the third direction are capable of being protected by the first cushion pad and the second cushion pad, thereby reducing the risk of damage to the workpiece caused by the first clamping portion and the second clamping portion.

In some embodiments, the third direction is perpendicular to the central axis.

In the above solution, when the third direction is perpendicular to the central axis, the clamping assembly will turn together with the turning seat in the turning process of the turning seat, without deflection. It is unnecessary to adjust an angle of the clamping assembly after the turning of the turning seat is completed, which improves the efficiency of turning the pickup unit.

In some embodiments, the mounting seat is arranged on one side of the base away from the mounting portion in the first direction.

In the above solution, the mounting seat and the mounting portion are arranged on different sides, which on the one hand facilitates the connection of the mounting seat and the mounting portion to the base, and on the other hand, reduces the risk of obstruction caused by the mounting portion to the pickup mechanism in a process of the pickup mechanism picking up the workpiece.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

Various other advantages and benefits will become apparent to those of ordinary skill in the art upon reading the following detailed description of the specific implementations. The drawings are for the purpose of illustrating some of the implementations only and are not to be considered a limitation to the present application. Also, the same components are denoted by the same reference numerals throughout the drawings. In the drawings:
Fig. 1 is a schematic structural view of a pickup tooling according to some embodiments of the present application;
Fig. 2 is a schematic structural view of a position-limit mechanism according to some embodiments of the present application;
Fig. 3 is a partial enlarged view of A in the pickup tooling shown in Fig. 1;
Fig. 4 is a schematic structural view of an adjustment mechanism according to some embodiments of the present application;
Fig. 5 is a schematic structural view of a pickup mechanism according to some embodiments of the present application;
Fig. 6 is a schematic structural view of a pickup mechanism (an elastic member between a first moving member and a first clamping portion is shown) according to some embodiments of the present application;
Fig. 7 is a schematic structural view of a pickup mechanism (a guide rod arranged on a first moving member is shown) according to some embodiments of the present application; and
Fig. 8 is a schematic view of cooperation of a second clamping portion and a second cushion pad according to some embodiments of the present application.

### Reference numerals in Detailed Description are as follows:

1-Base; 11-First plate; 12-Second plate; 13-Guide rail; 14-Drag chain; 3-Pickup mechanism; 31-Connecting component; 32-Mounting seat; 321-First seat body; 322-Second seat body; 323-Third seat body; 33-Driving member; 34-Clamping assembly; 341-First clamping portion; 342-Second clamping portion; 35-Turning seat; 36-First moving member; 37-Second moving member; 38-Elastic member; 39-Guide rod; 310-Orienting rail; 311-Second cushion pad; 312-First cushion pad; 4-Mounting portion; 41-Connecting pole; 42-First flange plate; 5-Position-limit mechanism; 51-First position-limit portion; 52-Second position-limit portion; 53-Mounting member; 6-Connecting screw; 7-Connecting threaded bushing; 8-Adjustment mechanism; 81-First pulley; 82-Conveyor belt; 821-First conveying portion; 822-Second conveying portion; 83-Second pulley; 84-Drive pulley; 85-Driven pulley; 86-Slider; 100-Pickup tooling; 200-Workpiece; Z-First direction; Y-Second direction; E-Central axis.

### Detailed Description

Embodiments of technical solutions of the present application are described in detail below in the following with reference to the accompanying drawings. The following embodiments are only used for more clearly illustrating the technical solution of the present application, and therefore are only used as examples and cannot be used for limiting the protection scope of the present application.

Unless otherwise defined, all technical and scientific terms used herein have the same meanings as those commonly understood by those skilled in the art of the present application. The terms used herein are only for the purpose of describing specific embodiments and are not intended to limit the present application. The terms "including" and "having" in the specification and claims of the present application, as well as the accompanying drawings, and any variations thereof are intended to cover non-exclusive inclusion.

In the description of the embodiments of the present application, technical terms such as "first" and "second" are merely used for distinguishing different objects, and cannot be understood as indicating or implying relative importance or implicitly indicating the quantities of indicated technical features, specific orders, or primary and secondary relationships. In the description of the embodiments of the present application, "a plurality of" means two or more, unless otherwise specified.

Reference herein to "an embodiment" means that a particular feature, structure, or characteristic described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "a plurality of" means two or more.

In the descriptions of the embodiments of the present invention, orientation or position relationships indicated by technical terms such as "thickness," "upper," "lower," and the like are based on orientation or position relationships shown in the accompanying drawings, and are merely used to facilitate description of the embodiments of the present application and simplified description, instead of indicating or implying that the specified apparatus or element must have the specific orientations or must be constructed and operated in specific orientations, and therefore, they cannot be considered as limitations on the embodiments of the present application.

In the description of the embodiments of the present application, unless otherwise expressly specified and limited, technical terms "mount," "join," "connect," "fix," and the like should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application may be understood according to specific circumstances.

In the embodiments of the present application, the same reference numerals denote the same components, and for the sake of brevity, detailed descriptions of the same components are omitted in different embodiments. It should be understood that the thickness, length, width, and other dimensions of the various components in the embodiments of the application shown in the accompanying drawings, as well as the overall thickness, length, and width of the integrated device, are for illustrative purposes only, and should not constitute any limitation to the present application.

A pickup tooling is a device applied to a robot and used for picking up a workpiece. The pickup tooling is usually mounted at an execution end of the robot. The execution end refers to a position on an arm of the robot for mounting a component for executing tasks. Under the action of the arm of the robot, the execution end is capable of moving within a certain space, so that the pickup tooling connected to the execution end is capable of completing functions such as picking of workpieces within a certain space, placing workpieces in designated positions, or stacking a plurality of workpieces.

The inventor noticed that a pickup unit of a traditional pickup tooling cannot move, so that it can only pick workpieces with a specific posture. When the posture of the workpiece to be picked changes, the pickup unit may not be able to form a good contact surface with the workpiece, thereby increasing the risk of loosening the picked workpiece. Taking a production process of battery cells as an example, it is necessary to use a conveying line to transport the battery cells and use a robot to remove the battery cells from the conveying line. When transporting the battery cells on the conveying line, for rectangular battery cells, the battery cells may lie flat on the conveying line (a thickness direction of the battery cells is perpendicular to a placement surface on the conveying line) or stand upright on the conveying line (a length or width direction of the battery cells is perpendicular to the placement surface on the conveying line). If the pickup tooling is designed to be suitable for clamping the battery cells lying flat on the conveying line, when picking up a battery cell standing upright on the conveying line, a contact surface between the pickup unit and the battery cell changes, and the pickup unit cannot correctly pick up the battery cell, thereby increasing the risk of loosening the battery cell.

Based on the problems existing in the above related art, the inventor has conducted in-depth research and designed a pickup tooling, including a base and a pickup mechanism. A mounting portion is arranged on one side of the base in a first direction, and the mounting portion is used for connecting an execution end of the robot. The pickup mechanism includes a mounting seat, a pickup unit, and a driving mechanism. The mounting seat is connected to the base, and the pickup unit is connected to the mounting seat in a turnable manner. The pickup unit is capable of rotating about a central axis perpendicular to the first direction under the action of the driving mechanism.

The pickup unit is connected to the mounting seat in a turnable manner, and therefore, through the turning, the pickup unit is capable of adjusting the posture of the pickup unit and pick up workpieces with different postures, thereby improving the compatibility of the pickup tooling to workpiece postures.

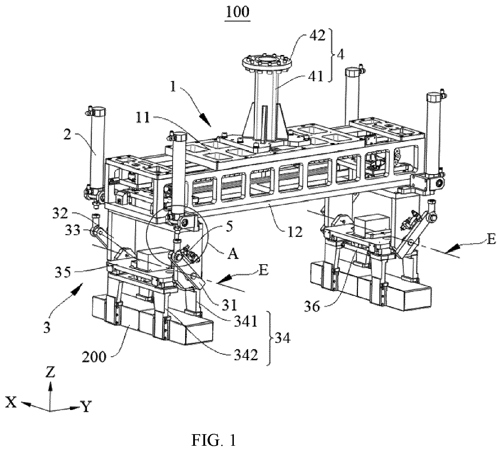

According to some embodiments of the present application, referring to Fig. 1, Fig. 1 is a schematic structural view of a pickup tooling 100 according to some embodiments of the present application. The embodiments of the present application provide a pickup tooling 100, including a base 1 and a pickup mechanism 3. A mounting portion 4 is arranged on one side of the base 1 in a first direction Z, and the mounting portion 4 is used for connecting an execution end of the robot. The pickup mechanism 3 includes a mounting seat 32, a pickup unit, and a driving mechanism. The mounting seat 32 is connected to the base 1, and the pickup unit is connected to the mounting seat 32 in a turnable manner and is used for picking up a workpiece 200. The driving mechanism is configured to drive the pickup unit to rotate about a central axis E to change the posture of the pickup unit, with the central axis E perpendicular to the first direction Z.

The first direction Z is a direction indicated by a Z-axis in the figure.

In the embodiments of the present application, the base 1 may be a frame structure to reduce the weight of the pickup mechanism 3. For example, the base 1 may be a cube frame structure composed of a plurality of plates, and the quantity of the plates may be four, five, or six. The plates may be provided with weight reduction holes.

The mounting portion 4 may be detachably connected to the base 1, making it easy to replace the mounting portion 4.

The mounting portion 4 may include a first flange plate 42, and the base 1 may be connected to the execution end of the robot through the first flange plate 42.

The mounting portion 4 may further include a connecting column 41, and the connecting column 41 may be detachably connected to the base 1. The first flange plate 42 may be arranged on one side of the connecting column 41 away from the base 1. By the connecting column 41, it is easy to adjust a spacing between the base 1 and the execution end.

In an embodiment where the base 1 is a frame structure, in the first direction Z, the base 1 may include a first plate 11 and a second plate 12. The first plate 11 and the second plate 12 are arranged opposite to each other, the connecting column 41 may be connected to the first plate 11, and the mounting seat 32 may be arranged on the side where the second plate 12 is located.

The execution end refers to a position located on an arm of the robot for mounting a component for executing tasks. In an embodiment where the mounting portion 4 includes the first flange plate 42, the execution end may be a second flange plate, and the first flange plate 42 is connected to the second flange plate so that the pickup tooling 100 is capable of being connected to the robot.

The mounting seat 32 may be fixedly connected to the base 1. In this embodiment, the mounting seat 32 may be connected to the base 1 in a relatively fixed position, or may be integrally formed with the base 1.

The mounting seat 32 may further be movably connected to the base 1.

When the pickup unit turns with respect to the mounting seat 32, it may revolve about the central axis E with respect to the mounting seat 32, or it may rotate about the central axis E with respect to the mounting seat 32.

The central axis E may be parallel to a direction indicated by an X-axis in the figure.

The pickup unit may pick up the workpieces 200 by clamping or pick up the workpieces 200 by adsorption.

Firstly, compared to a conventional pickup mechanism 3, the pickup unit in the embodiments of the present application is connected to the mounting seat 32 in a turnable manner. When picking up the workpiece 200, the pickup unit is capable of turning under the action of the driving mechanism to change the posture of the pickup unit, so that the pickup unit is capable of picking up workpieces 200 with different postures, thereby improving the compatibility of the pickup tooling 100. Secondly, although the conventional pickup mechanism 3 is capable of adjusting the posture of the pickup unit through the arm of the robot, the arm of the robot in the present application embodiment cannot move in the turning process, thereby reducing the number of working times of the arm of the robot, reducing the wear and tear of the robot, and thus improving the service life of the robot.

Taking the pickup tooling 100 used for picking up battery cells in the embodiments of the present application as an example, if the pickup tooling 100 is in a state suitable for picking up battery cells lying flat on the conveying line (the thickness direction of the battery cells is perpendicular to the placement surface of the conveying line), when it is necessary to pick up battery cells standing upright on the conveying line (the length or width direction of the battery cells is perpendicular to the placement surface of the conveying line), the pickup unit may be turned by 90°, so that the pickup unit is capable of picking up battery cells with different poses, thereby improving the compatibility of the pickup tooling 100.

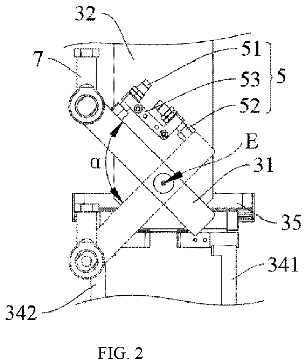

According to some embodiments of the present application, referring to Fig. 2, Fig. 2 is a schematic structural view of a position-limit mechanism 5 according to some embodiments of the present application. The pickup unit has a first limit position and a second limit position, and the pickup tooling 100 further includes a position-limit mechanism 5, and the position-limit mechanism 5 is configured to limit the pickup unit from turning between the first limit position and the second limit position.

In Fig. 2, the first limit position may be a position where the connecting component 31 is in a solid line contour, and the second limit position may be a position where the connecting component 31 is in a dashed line contour.

The first limit position and the second limit position are two endpoint values of a movement trajectory when the pickup unit turns.

The first limit position and the second limit position may also be positions where the pickup unit is in two set postures. For example, when the pickup tooling 100 in the embodiments of the present application is used for picking up battery cells, the first limit position may be the position suitable for picking up battery cells lying flat on the conveying line, and the second limit position may be the position suitable for picking up battery cells standing upright on the conveying line.

The position-limit mechanism 5 may limit the turning of the pickup unit by pressing against it. For example, when the pickup unit is located at the first limit position, the position-limit mechanism 5 may exactly press against the pickup unit, or when the pickup unit is located at the second limit position, the position-limit mechanism 5 may exactly press against the pickup unit.

By limiting the turning of the pickup unit through the position-limit mechanism 5, on the one hand, the risk of damage to the pickup tooling 100 caused by excessive turning of the pickup unit is reduced. On the other hand, when the pickup unit reaches the first limit position or the second limit position, the pickup unit may be in the corresponding posture, making it easy to quickly switch the working state of the pickup unit and improving work efficiency.

In this embodiment, a distance angle between the first limit position and the second limit positions may be greater than 0° but less than 360°.

According to some embodiments of the present application, referring to Fig. 2, the first limit position is 90° away from the second limit position.

The distance angle between the first limit position and the second limit position refers to an angle α at which the pickup unit rotates when the pickup unit rotates from one limit position of the first limit position and second limit position about the central axis E to another limit position.

When the angle α at which the pickup unit rotates is 90°, postures of the pickup unit at the first limit position and the second limit position are significantly different, which increases the applicability of the pickup unit. For example, if the pickup unit is located at the first limit position, the pickup unit can pick up the workpiece 200 in a vertical direction, and when the pickup unit is located at the second limit position, the pickup unit can further pick up the workpiece 200 in a horizontal direction.

According to some embodiments of the present application, referring to Fig. 2, the position-limit mechanism 5 is mounted on the mounting seat 32, and the position-limit mechanism 5 has a first position-limit portion 51 and a second position-limit portion 52. The pickup mechanism 3 further includes a connecting component 31 fixedly connected to the pickup unit, and the connecting component 31 is configured to: press against the first position-limit portion 51 when the pickup unit is located at the first limit position; and press against the second position-limit portion 52 when the pickup unit is located at the second limit position.

In this embodiment, the connecting component 31 may be a separate component connected to the pickup unit in a relatively fixed position. The connecting component 31 may be non-detachably connected to the pickup unit, for example, the connecting component 31 may be welded to the pickup unit; or may be detachably connected to the pickup unit, for example, the connecting component 31 may be connected to the pickup unit through bolts.

In this embodiment, the connecting component 31 may also be integrally formed with the pickup unit.

The position-limit mechanism 5 may be detachably connected to the mounting seat 32.

The first position-limit portion 51 and the second position-limit portion 52 may be directly connected to the mounting seat 32. Alternatively, the position-limit mechanism 5 may further include a mounting member 53, the mounting member 53 may be connected to the mounting seat 32, and the first position-limit portion 51 and the second position-limit portion 52 are connected to the mounting member 53.

In the above embodiment, the mounting member 53 may include a first part and a second part, the first part and the second part are sequentially connected to form a bent structure. The first position-limit portion 51 may be connected to the first part, and the second position-limit portion 52 may be connected to the second part.

The first position-limit portion 51 and the second position-limit portion 52 may be two independent components, or the first position-limit portion 51 and the second position-limit portion 52 may be different parts of the same component.

The first position-limit portion 51 and the second position-limit portion 52 may be block-shaped structures, and when the pickup unit presses against the first position-limit portion 51 or the second position-limit portion 52, the pickup unit cannot move.

The first position-limit portion 51 and the second position-limit portion 52 may also be structures with buffering performance. For example, the first position-limit portion 51 and the second position-limit portion 52 may also be buffers, and the buffers are used for mounting fixed ends that are fixed and floating ends that are floatingly connected to the fixed ends. In the embodiment of the position-limit mechanism 5 including the mounting member 53, the fixed end may be connected to the mounting member 53, and the floating end may be used for pressing against the connecting component 31. The floating end provides protection for the connecting component 31, thereby reducing the risk of damage to the connecting component 31 caused by collision. The structure and working principle of the buffer are well-known to those skilled in the art and will not be repeated here.

The connecting component 31 cooperates with the first position-limit portion 51 and the second position-limit portion 52 to limit the turning of the pickup unit at the first limit position and second limit position, thereby reducing the possibility of direct collision between the pickup unit and the first position-limit portion 51 and second position-limit portion 52, and reducing the risk of damage to the pickup unit.

According to some embodiments of the present application, the connecting component 31 is rotatably arranged on the mounting seat 32, and an axis of the connecting component 31 rotating with respect to the mounting seat 32 coincides with the central axis E.

The connecting component 31 may be rotatably connected to the mounting seat 32 through a first rotating shaft, and the connecting component 31 is connected to the pickup unit.

Alternatively, the pickup unit may be rotatably connected to the mounting seat 32 through a second rotating shaft, and the connecting component 31 is connected to the second rotating shaft.

The connecting component 31 may be a rod-shaped structure.

By rotatably connecting the connecting component 31 to the mounting seat 32, on the one hand, the mounting seat 32 is capable of supporting the connecting component 31 and reduce the risk of damage when the connecting component 31 presses against the first position-limit portion 51 and the second position-limit portion 52. On the other hand, the connecting component 31 is further connected to the pickup unit, so that the connecting component 31 is capable of playing a transmission role. By driving the connecting component 31 to rotate, the pickup unit can be driven to rotate.

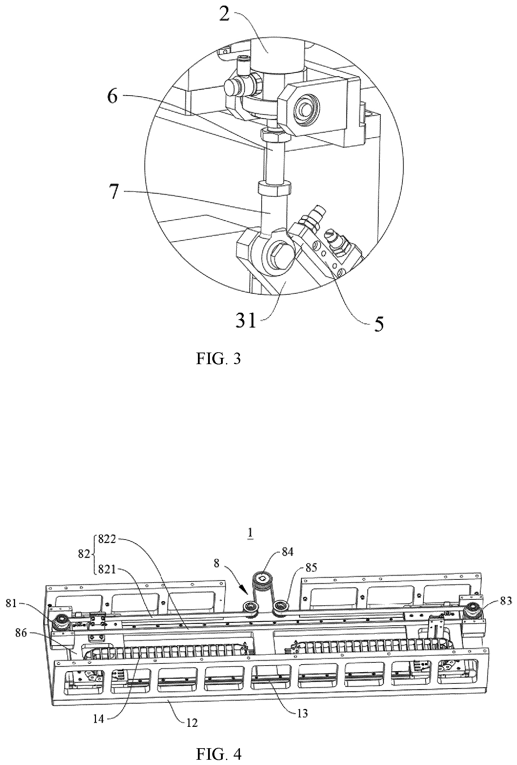

According to some embodiments of the present application, referring to Fig. 3, Fig. 3 is a partial enlarged view of A in the pickup tooling 100 shown in Fig. 1. The driving mechanism is connected to the connecting component 31, and the driving mechanism is used for driving the connecting component 31 to swing.

The driving mechanism may be a structure with a rotatable output end, for example, the driving mechanism may be a motor, a fixed end of the motor is connected to the mounting seat 32, and an output end of the motor is connected to the connecting component 31. Alternatively, the driving component may further include a motor and a reducer, the reducer is connected to the mounting seat 32, an output end of the motor is connected to an input end of the reducer, and an output end of the reducer is connected to a rotation center of the connecting component 31.

The driving mechanism may also be a structure with a reciprocating output end, for example, the driving mechanism may include a hydraulic cylinder or an air cylinder, a cylinder body of the hydraulic cylinder or air cylinder is rotatably connected to the mounting seat 32, a telescopic end of the hydraulic cylinder or air cylinder is rotatably connected to the connecting component 31, the hydraulic cylinder or air cylinder is relative to the rotation axis of the mounting seat 32, and the telescopic end is parallel to a rotation axis of the connecting component 31 and the central axis E.

In this embodiment, the pickup tooling 100 may further include a connecting screw 6 and a connecting threaded bushing 7. The connecting screw 6 may be rotatably connected to the driving mechanism, the connecting threaded bushing 7 may be rotatably connected to the connecting component 31, and the connecting screw 6 may be threaded to the connecting threaded bushing 7. Under the action of the connecting screw 6 and the connecting threaded bushing 7, the driving mechanism and the connecting component 31 may be detachably connected.

The driving mechanism drives the connecting component 31 to drive the pickup unit to rotate, which on the one hand reduces the risk of damage to the pickup unit caused by a torque of the driving mechanism directly acting on the pickup unit. On the other hand, the position of the driving mechanism does not need to be limited to the position of the pickup unit, so that it is easy to arrange the position of the driving mechanism reasonably.

According to some embodiments of the present application, referring to Fig. 3, the pickup mechanism 3 further includes a connecting component 31 fixedly connected to the pickup unit, and the connecting component 31 is rotatably arranged on the mounting seat 32. An axis of the connecting component 31 rotating with respect to the mounting seat 32 coincides with the central axis E, the driving mechanism is connected to the connecting component 31, and the driving mechanism is used for driving the connecting component 31 to swing.

In this embodiment, the connecting component 31 may be a separate component and connected to the pickup unit in a relatively fixed position. In this embodiment, the connecting component 31 may be non-detachably connected to the pickup unit, for example, the connecting component 31 may be welded to the pickup unit; or may be detachably connected to the pickup unit, for example, the connecting component 31 may be connected to the pickup unit through bolts.

The connecting component 31 may be rotatably connected to a rod body of the mounting seat 32. The driving mechanism may be a structure with a reciprocating output end, for example, the driving mechanism may include a hydraulic cylinder or an air cylinder, a cylinder body of the hydraulic cylinder or air cylinder is rotatably connected to the mounting seat 32, a telescopic end of the hydraulic cylinder or air cylinder is rotatably connected to the connecting component 31, the hydraulic cylinder or air cylinder is relative to the rotation axis of the mounting seat 32, and the telescopic end is parallel to a rotation axis of the connecting component 31 and the central axis E.

The connecting component 31 may also be a driven gear, and the driving mechanism may include a driving gear and a driving structure. The driving gear and the driven gear are rotatably connected to the mounting seat 32 respectively. A rotating axis of the driven gear coincides with the central axis E, and the driving gear is engaged to the driven gear. The driving structure is connected to the driving gear in a transmission manner, and is used for driving the driving gear to rotate. The driving structure may be an electric motor.

The connecting component 31 is capable of playing a transmission role. By driving the connecting component 31 to rotate, the pickup unit can be driven to rotate. The driving mechanism drives, through the connecting component 31, the pickup unit to rotate, which reduces the risk of damage to the pickup unit caused by the torque of the driving mechanism directly acting on the pickup unit. It is convenient to arrange positions of the driving mechanism and the connecting component 31 with respect to the mounting seat 32.

According to some embodiments, referring to Fig. 1, the mounting seat 32 is arranged on the base 1 to be adjustable in position in a second direction Y, and the second direction Y is perpendicular to the first direction Z.

The second direction Y is a direction indicated by a Y-axis in the figure.

The mounting seat 32 may be slidably connected to the base 1, for example, a guide rail 13 extending in the second direction Y may be arranged on the base 1, and the mounting seat 32 may be slidably connected to the guide rail 13.

Alternatively, the base 1 may have a plurality of mounting stations arranged in the second direction Y, and the mounting seat 32 may be selectively connected to one of the mounting stations.

By arranging the mounting seat 32 on the base 1 to be adjustable in position, the position of the pickup unit with respect to the base 1 is adjustable. The position of the pickup unit with respect to the base 1 is adjusted so that the pickup unit is capable of being aligned with a workpiece 200, thereby reducing the risk of misalignment between the pickup unit and the workpiece 200 causing inability of the pickup unit picking the workpiece 200. Moreover, the pickup tooling 100 is capable of being suitable for various types of conveying lines, thereby improving the compatibility of the pickup tooling 100.

According to some embodiments of the present application, the second direction Y is perpendicular to the central axis E.

The second direction Y is perpendicular to the central axis E, so that when the pickup unit turns, the pickup unit will not deflect, and therefore, after the posture adjustment of the pickup unit is completed, the workpiece 200 can be clamped, thereby improving the work efficiency.

According to some embodiments of the present application, referring to Fig. 4, Fig. 4 is a schematic structural view of an adjustment mechanism 8 according to some embodiments of the present application. The pickup tooling 100 includes the adjustment mechanism 8 and two pickup mechanisms 3. The adjustment mechanism 8 is mounted on the base 1, the mounting seat 32 is connected to the adjustment mechanism 8, and the adjustment mechanism 8 is used for adjusting a distance between the mounting seats 32 of the two pickup mechanisms 3 in the second direction Y.

The two pickup mechanisms 3 may be arranged in the second direction Y.

The adjustment mechanism 8 may include two lead screws extending in the second direction Y. The lead screws are rotatably connected to the base 1, and one lead screw is threaded to one pickup mechanism 3.

The pickup tooling 100 includes the two pickup mechanisms 3, which increases the number of workpieces 200 that can be picked up by the pickup tooling 100 at a single time and improves the work efficiency. The pickup tooling 100 including two pickup mechanisms 3 further enables the pickup tooling 100 to be capable of being applicable to a use scenario with a plurality of conveying lines arranged in parallel. By adjusting positions of the two pickup mechanisms 3 by the adjustment mechanism 8, the pickup units of the pickup mechanisms 3 are capable of accurately picking up workpieces 200 on the plurality of conveying lines.

In some embodiments, the base 1 may be provided with a drag chain 14, for protecting a wiring harness connected to the pickup mechanism 3.

According to some embodiments of the present application, referring to Fig. 4, the adjustment mechanism 8 includes two sliders 86 and a conveyor belt 82. The sliders 86 are slidably connected to the base 1 in the second direction Y. Each slider 86 is connected to a mounting seat 32. The conveyor belt 82 has a first transmission part and a second transmission part that move in opposite directions in the second direction Y. The two sliders 86 are respectively connected to the first transmission part and the second transmission part.

In an embodiment where the guide rail 13 extending in the second direction Y is arranged on the base 1 , the slider 86 may be slidably connected to the guide rail 13.

The combination of the slider 86 and the guide rail 13 improves the accuracy of the mounting seat 32 moving with respect to the base 1.

The mounting seat 32 may be detachably connected to the slider 86.

A first conveying portion 821 and a second conveying portion 822 may be formed by two conveyor belts 82, that is, the adjustment mechanism 8 includes two conveyor belts 82, and two sliders 86 are respectively connected to the two conveyor belts 82.

The first conveying portion 821 and the second conveying portion 822 may also be formed by two parts of the same conveyor belt 82. For example, when the conveyor belt 82 is straightened by two pulleys, the part of the conveyor belt 82 located between the two pulleys forms two parallel sections with opposite moving directions, and the two sections form the first connecting portion and the second connecting portion, respectively.

The slider 86 may be provided with a clamping structure, and the clamping structure includes a third clamping portion and a fourth clamping portion. The third clamping portion is connected to the slider 86, and the fourth clamping portion is connected to the third clamping portion. The first conveying portion 821 or the second conveying portion 822 corresponding to the slider 86 is clamped between the third clamping portion and the fourth clamping portion, so that the slider 86 may be connected to the corresponding first conveying portion 821 and second conveying portion 822.

The third clamping portion and the fourth clamping portion may be connected by bolts.

A clamping tooth may be arranged on one side of the fourth clamping portion facing the third clamping portion, and the clamping tooth reduces the risk of a conveying portion clamped between the third clamping portion and the fourth clamping portion slipping from the clamping structure.

When the conveyor belt 82 rotates, the first conveying portion 821 and the second conveying portion 822 move in a straight line in the second direction Y, and the two have opposite moving directions. The two pickup mechanisms 3 may be closed or separated under the action of the first conveying portion 821 and the second conveying portion 822, thereby achieving the objective of adjusting the distance between the two pickup mechanisms 3 in the second direction Y. Driving the two pickup mechanisms 3 through the conveyor belt 82 has the advantage of a large adjustment range, thereby increasing the travel of the pickup mechanism 3.

According to some embodiments of the present application, referring to Fig. 4, the adjustment mechanism 8 further includes a first pulley 81 and a second pulley 83. The first pulley 81 and the second pulley 83 are both rotatably connected to the base 1 and are arranged in the second direction Y, and the conveyor belt 82 is wound around the first pulley 81 and the second pulley 83.

The first pulley 81 and the second pulley 83 may be synchronous pulleys, and correspondingly, the conveyor belt 82 may be a synchronous belt. The synchronous belt and the synchronous pulley reduce the risk of slipping between the conveyor belt 82 and the two pulleys.

The adjustment mechanism 8 may further include a drive pulley 84, and the drive pulley 84 may be arranged between the first pulley 81 and the second pulley 83, and away from the first pulley 81 and the second pulley 83 in a direction perpendicular to the second direction Y. The conveyor belt 82 is wound around the first pulley 81, the second driving, and the drive pulley 84, and the part of the conveyor belt 82 in contact with the drive pulley 84 forms, on the first conveying portion 821, a protruding portion that protrudes toward the side of the first conveying portion 821 away from the second conveying portion 822. Under the action of the drive pulley 84, the conveyor belt 82 rotates, and the protruding portion formed by the first conveying portion 821 increases a contact area between the conveyor belt 82 and the drive pulley 84, thereby reducing the risk of slipping between the conveyor belt 82 and the drive pulley 84.

The adjustment mechanism 8 may further include two driven pulleys 85, and the two driven pulleys 85 are rotatably connected to the base 1. The drive pulley 84 is arranged between the two driven pulleys 85, and is away from the two driven pulleys 85 towards the side of the first conveying portion 821 that is away from the second conveying portion 822. The two driven pulleys 85 press against an outer peripheral surface of the conveyor belt 82. The two driven pulleys 85 are capable of straightening the part of the conveyor belt 82 wound around the outer peripheral surface of the drive pulley 84, thereby improving the transmission efficiency between the drive pulley 84 and the conveyor belt 82, and reducing the risk of slipping between the conveyor belt 82 and the drive pulley 84.

Either of the first pulley 81 and the second pulley 83 may be a driving pulley.

The adjustment mechanism 8 may further include a motor, and a fixed end of the motor is connected to the base 1. In an embodiment where the adjustment mechanism 8 includes the drive pulley 84, an output end of the motor may be connected to the drive pulley 84 to drive the pulley 84 to rotate. In an embodiment where either of the first pulley 81 and the second pulley 83 is a driving pulley, the output end of the motor may be connected to the driving pulley.

The first pulley 81 and the second pulley 83 can both play a driving role, so that the conveyor belt 82 is capable of moving. The first pulley 81 and the second pulley 83 may straighten the conveyor belt 82, so that the conveyor belt is capable of forming the first conveying portion 821 and the second conveying portion 822.

In an embodiment where the base 1 is a frame structure, the first pulley 81, the second pulley 83, and the conveyor belt 82 may be arranged inside the base 1. The slider 86 may be connected to the conveyor belt 82 through the weight reducing holes on the plates of the base 1.

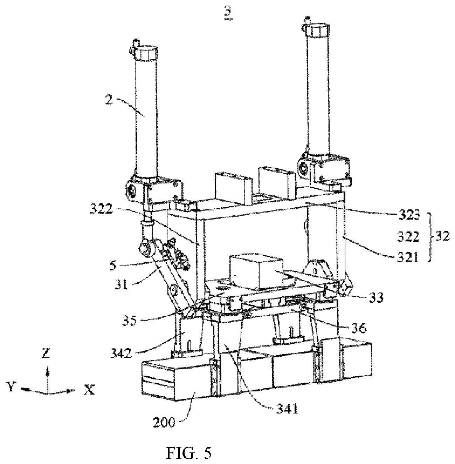

According to some embodiments of the present application, referring to Fig. 5, Fig. 5 is a schematic structural view of a pickup mechanism 3 according to some embodiments of the present application. The pickup unit includes a turning seat 35, a clamping assembly 34, and an adjustment assembly. The turning seat 35 is rotatably connected to the mounting seat 32 about the central axis E, and the clamping assembly 34 includes a first clamping portion 341 and a second clamping portion 342 arranged opposite to each other in a third direction. The adjustment assembly is mounted on the turning seat 35, and the adjustment assembly is configured to adjust a distance between the first clamping portion 341 and the second clamping portion 342 in the third direction, so that the first clamping portion 341 and the second clamping portion 342 cooperate to clamp a workpiece 200.

In this embodiment, the mounting seat 32 may include a first seat body 321, a second seat body 322, and a third seat body 323. The first seat body 321 and the third seat body 323 are arranged at an interval, and the second seat body 322 is connected to the first seat body 321 and the third seat body 323.

In the above embodiment, the turning seat 35 may be arranged between the first seat body 321 and the third seat body 323, and rotatably connected to the first seat body 321 and the third seat body 323. The first seat body 321 and the third seat body 323 can protect the turning seat 35, and two sides of the turning seat 35 may be rotatably connected to the first seat body 321 and the second seat body 322 respectively, thereby improving the connection strength between the turning seat 35 and the mounting seat 32.

The first clamping portion 341 and the second clamping portion 342 may be connected to the turning seat 35. For example, an orienting rail 310 extending in the third direction may be arranged on the turning seat 35. The first clamping portion 341 may be slidably connected to the orienting rail 310, and the cooperation of the first clamping portion 341 and the orienting rail 310 is capable of improving the movement accuracy of the first clamping portion 341.

The first clamping portion 341 and the second clamping portion 342 may also be driven directly through the adjustment assembly without being connected to the turning seat 35.

One of the first clamping portions 341 and the second clamping portion 342 may be connected to the turning seat 35 in a relatively fixed position, while the other may be movably connected to the turning seat 35. Alternatively, both of them may be movably arranged on the turning seat 35.

In an embodiment where the connecting component 31 is connected to the pickup mechanism 3, the connecting component 31 may be connected to the turning seat 35.

The third direction may be set according to a direction of grasping the workpiece 200. For example, the third direction may be any direction perpendicular to the first direction Z. When the first direction Z is a vertical direction, the first clamping portion 341 and the second clamping portion 342 are capable of being horizontally closed to clamp the workpiece 200.

The adjustment assembly is mounted on the turning seat 35 and the clamping assembly 34 is connected to the adjustment assembly; therefore, when the turning seat 35 is turned, the clamping assembly 34 is also turned together, so that the posture of the clamping assembly 34 is capable of being adjusted, thereby improving the compatibility of the clamping assembly 34 with postures of the workpieces 200.

In this embodiment, there may be two driving mechanisms, and the two driving mechanisms are arranged on both sides of the mounting seat 32 along the central axis E.

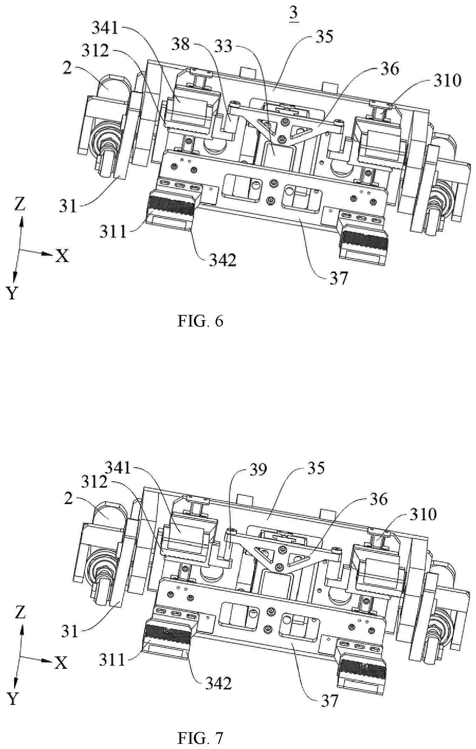

According to some embodiments of the present application, referring to Fig. 5, Fig. 6, and Fig. 7, Fig. 6 is a schematic structural view of a pickup mechanism 3 (an elastic member 38 between a first moving member 36 and a first clamping portion 341 is shown) according to some embodiments of the present application; and Fig. 7 is a schematic structural view of a pickup mechanism 3 (a guide rod 39 arranged on a first moving member 36 is shown) according to some embodiments of the present application. The adjustment assembly includes a driving member 33 and a first moving member 36. The driving member 33 is mounted on the turning seat 35, and has a first output end. The first moving member 36 is connected to the first output end, and the driving member 33 is configured to drive the first moving member 36 to move in the third direction. In the third direction, the first clamping portion 341 is movably arranged on the turning seat 35, and the first clamping portion 341 is connected to the first moving member 36 through an elastic member 38.

In this embodiment, the driving member 33 may be an air cylinder or a hydraulic cylinder, a cylinder body of the air cylinder or hydraulic cylinder is connected to the turning seat 35, a telescopic end of the air cylinder or hydraulic cylinder is a first output end, and the telescopic end of the air cylinder or hydraulic cylinder can move in the third direction.

On the one hand, the first moving member 36 plays a transmission role, so that the torque at the first output end is capable of being transmitted to the first clamping portion 341 through the first moving member 36. On the other hand, the first moving member 36 also plays a connecting role, facilitating the connection between the first clamping portion 341 and the first output end.

The first clamping portion 341 and the first moving member 36 may be connected directly through the elastic member 38.

The first moving member 36 may also be provided with a guide rod 39 extending in the third direction, the first clamping portion 341 may also be provided with a guide hole, the guide rod 39 penetrates the guide hole, and the elastic member 38 may be sleeved outside the guide rod 39.

In this embodiment, the elastic member 38 may be a spring or a leaf spring.

In the third direction, the elastic member 38 may be clamped between the first clamping portion 341 and the first moving member 36, and the first moving member 36 may be located on the side of the first clamping portion 341 backing onto the second clamping portion 342. At this time, when the first clamping portion 341 and the second clamping portion 342 are closed, on the one hand, the elastic member 38 plays a compensation role to reduce the risk that the first clamping portion 341 and the second clamping portion 342 cannot clamp the workpiece 200 because the workpiece 200 is too small. On the other hand, the elastic member 38 is compressed when clamping the workpiece 200, thereby providing protection and reducing the risk of damage to the workpiece 200 due to an excessive force.

The first moving member 36 may also be located on one side of the first clamping portion 341 facing the second clamping portion 342. In this embodiment, when the first clamping portion 341 and the second clamping portion 342 are closed, the elastic member 38 is stretched, and the elastic member 38 plays a protective role, thereby reducing the risk of damage to the workpiece 200 due to an excessive force.

According to some embodiments of the present application, referring to Fig. 6, the driving member 33 has a second output end opposite to the first output end in the third direction, the second clamping portion 342 is movably arranged on the turning seat 35 in the third direction, and the second clamping portion 342 is connected to the second output end.

In this embodiment, the driving member 33 may be an air cylinder with two telescopic ends, and the two telescopic ends of the air cylinder are the first output end and the second output end, respectively.

In an embodiment where an orienting rail 310 extends in the third direction is arranged on the turning seat 35, both the first clamping portion 341 and the second clamping portion 342 may be slidably connected to the orienting rail 310. The first clamping portion 341 and the second clamping portion 342 cooperate with the orienting rail 310, which on the one hand improves the connection strength of the first clamping portion 341 and the second clamping portion 342 with the mounting seat 32, and on the other hand improves the movement accuracy of the first clamping portion 341 and the second clamping portion 342.

The first clamping portion 341 and the second clamping portion 342 are capable of being closed or separated with each other under the action of the driving member 33. When clamping the workpiece 200, both the first clamping portion 341 and the second clamping portion 342 are capable of providing a clamping force, thereby improving the stability of the clamping assembly 34 clamping the workpiece 200 and reducing the risk of falling off of the clamped workpiece 200.

In this embodiment, the pickup mechanism 3 may further include a second moving member 37, the second moving member 37 is connected to the second output end, and the second clamping portion 342 is connected to the second moving member 37.

According to some embodiments of the present application, referring to Fig. 5 and Fig. 6, the pickup mechanism 3 includes a plurality of clamping assemblies 34, and the first clamping portions 341 of the plurality of clamping assemblies 34 correspond to one first moving member 36.

The plurality of clamping assemblies 34 may be arranged in a direction perpendicular to the third direction.

In an embodiment where the orienting rail 310 extending in the third direction is provided on the turning seat 35, a plurality of orienting rails 310 may be arranged corresponding to the clamping assemblies 34, and the first clamping portion 341 and the second clamping portion 342 of each clamping assembly 34 are both slidably connected to the corresponding orienting rail 310.

The first clamping portions 341 of the plurality of clamping assemblies 34 correspond to one first moving member 36, which on the one hand enables the plurality of clamping assemblies 34 to be capable of synchronously clamping a workpiece 200, thereby reducing the risk that some clamping assemblies 34 are capable of clamping the workpiece 200 tightly and some clamping assemblies 34 are incapable of clamping the workpiece 200 tightly due to asynchronous movement of the various first clamping portions 341. On the other hand, it enables the plurality of clamping assemblies to be capable of sharing a driving member 33, thereby reducing the manufacturing cost of the pickup tooling 100, simplifying the structure of the pickup tooling 100, and improving the reliability of the pickup tooling 100.

In an embodiment where the pickup mechanism 3 includes the second moving member 37, the second clamping portions 342 of the plurality of clamping assemblies 34 correspond to one second moving member 37.

According to some embodiments of the present application, there may be two clamping assemblies 34, and the driving member 33 may be arranged between the two clamping assemblies 34.

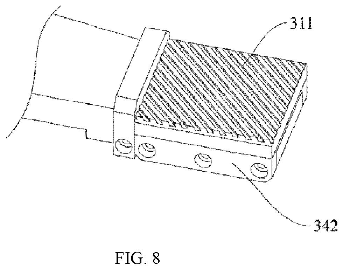

According to some embodiments of the present application, referring to Fig. 7 and Fig. 8, Fig. 8 is an enlarged view of B in the pickup mechanism 3 shown in Fig. 6. In the third direction, a first cushion pad 312 is arranged on one side of the first clamping portion 341 facing the workpiece 200. And/or, in the third direction, a second cushion pad 311 is arranged on one side of the second clamping portion 342 facing the workpiece 200.

The first cushion pad 312 may be detachably connected to the first clamping portion 341, and the second cushion pad 311 may be detachably connected to the second clamping portion 342, thereby facilitating the replacement of the first cushion pad 312 and the second cushion pad 311.

The first cushion pad 312 and the second cushion pad 311 may be of an insulating material, for example, the first cushion pad 312 and the second cushion pad 311 may be made of rubber or silicone.

When only the first clamping portion 341 is provided with the first cushion pad 312, it not only enables the first cushion pad 312 to be capable of playing a buffering protection role, but also saves the second cushion pad 311 and reduces the manufacturing cost of the pickup tooling 100. When the first clamping portion 341 is provided with the first cushion pad 312 and the second clamping portion 342 is provided with the second cushion pad 311, both sides of the workpiece 200 in the third direction are capable of being protected by the first cushion pad 312 and the second cushion pad 311, thereby reducing the risk of damage to the workpiece 200 caused by the first clamping portion 341 and the second clamping portion 342.

In this embodiment, a plurality of protrusions may be arranged on surfaces of the first cushion pad 312 and the second cushion pad 311 facing the workpiece 200, so as to increase friction forces between the first cushion pad 312 and second cushion pad 311 and the workpiece 200.

According to some embodiments of the present application, the third direction is perpendicular to the central axis E.

In this embodiment, the third direction may also be parallel to the second direction Y.

When the third direction is perpendicular to the central axis E, the clamping assembly 34 will turn together with the turning seat 35 in the turning process of the turning seat 35, without deflection. It is unnecessary to adjust an angle of the clamping assembly 34 after the turning of the turning seat 35 is completed, which improves the efficiency of turning the pickup unit. For example, taking the pickup tooling 100 used for picking up battery cells in the embodiments of the present application as an example, if the pickup tooling 100 is in a state suitable for picking up battery cells lying flat on the conveying line (the thickness direction of the battery cells is perpendicular to the placement surface of the conveying line), when it is necessary to pick up battery cells standing upright on the conveying line (the length or width direction of the battery cells is perpendicular to the placement surface of the conveying line), the turning seat 35 is turned, and in the turning process of the turning seat 35, the battery cell may be maintained between the first clamping portion 341 and the second clamping portion 342, so that after the turning is completed, the first clamping portion 341 and the second clamping portion 342 are capable of directly clamping the battery cell.

According to some embodiments of the present application, please refer to Fig. 1. The mounting seat 32 is arranged on one side of the base 1 away from the mounting portion 4 in the first direction.

When the first direction is a vertical direction, the mounting portion 4 may be arranged at the top of the base 1, and the mounting seat 32 may be arranged at the bottom of the base 1 to reduce the risk of the mounting portion 4 obstructing the pickup unit from picking up the workpiece 200.

In an embodiment of the base 1 including the first plate 11 and the second plate 12, the first plate 11 may be arranged at the top of the base 1, the second plate 12 may be arranged at the bottom of the base 1, the mounting portion 4 is connected to the first plate 11, and the mounting seat 32 is connected to the second plate 12.

By arranging the mounting seat 32 and the mounting portion 4 on different sides, on the one hand, it is convenient to connect the mounting seat 32 and the mounting portion 4 to the base 1, and on the other hand, it reduces the risk of obstruction caused by the mounting portion 4 to the pickup mechanism 3 in the process of picking up the workpiece 200 by the pickup mechanism 3.

According to some embodiments of the present application, referring to Fig. 1 and Fig. 5, the embodiments of the present application provide a pickup tooling 100, including a base 1 and a pickup mechanism 3. A mounting portion 4 is arranged on one side of the base 1 in a first direction Z, and the mounting portion 4 is used for connecting an execution end of the robot. The pickup mechanism 3 includes a mounting seat 32, a pickup unit, and a driving mechanism.

The mounting seat 32 is arranged on the base 1 to be adjustable in position in the second direction Y, and the pickup unit includes a turning seat 35, a clamping assembly 34, and an adjustment assembly. The turning seat 35 is rotatably connected to the mounting seat 32 about the central axis E, and the clamping assembly 34 includes a first clamping portion 341 and a second clamping portion 342 arranged opposite to each other in a third direction. The adjustment assembly is mounted on the turning seat 35, and the adjustment assembly is configured to adjust a distance between the first clamping portion 341 and the second clamping portion 342 in the third direction, so that the first clamping portion 341 and the second clamping portion 342 cooperate to clamp a workpiece 200. The driving mechanism is configured to drive the turning seat 35 to rotate about the central axis E to change the posture of the pickup unit. The direction of the central axis E, the first direction Z, and the second direction Y are perpendicular pairwise, and the third direction is parallel to the second direction Y.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, and all should be incorporated in the scope of the claims and specification of the present application. In particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A pickup tooling, comprising:
a base having a mounting portion arranged on one side in a first direction, the mounting portion being used for connecting an execution end of a robot; and
a pickup mechanism, comprising:
a mounting seat connected to the base;
a pickup unit connected to the mounting seat in a turnable manner, and being used for picking up a workpiece; and
a driving mechanism configured to drive the pickup unit to rotate about a central axis to change a posture of the pickup unit, with the central axis perpendicular to the first direction.

2. The pickup tooling according to claim 1, wherein the pickup unit has a first limit position and a second limit position, the pickup tooling further comprises a position-limit mechanism configured to limit the pickup unit from turning between the first limit position and the second limit position.

3. The pickup tooling according to claim 2, wherein the first limit position is 90° away from the second limit position.

4. The pickup tooling according to claim 2 or 3, wherein the position-limit mechanism is mounted on the mounting seat, and has a first position-limit portion and a second position-limit portion; and
the pickup mechanism further comprises a connecting component fixedly connected to the pickup unit, and the connecting component is configured to: press against the first position-limit portion when the pickup unit is located at the first limit position; and press against the second position-limit portion when the pickup unit is located at the second limit position.

5. The pickup tooling according to any one of claims 1 to 4, wherein the connecting component is rotatably arranged on the mounting seat, and an axis of the connecting component rotating with respect to the mounting seat coincides with the central axis.

6. The pickup tooling according to claim 4, wherein the driving mechanism is connected to the connecting component, and is used for driving the connecting component to swing.

7. The pickup tooling according to any one of claims 1 to 6, wherein the pickup mechanism further comprises a connecting component fixedly connected to the pickup unit, the connecting component is rotatably arranged on the mounting seat, an axis of the connecting component rotating with respect to the mounting seat coincides with the central axis, the driving mechanism is connected to the connecting component, and the driving mechanism is used for driving the connecting component to swing.

8. The pickup tooling according to any one of claims 1 to 7, wherein the mounting seat is arranged on the base to be adjustable in position in a second direction, and the second direction is perpendicular to the first direction.

9. The pickup tooling according to claim 8, wherein the second direction is perpendicular to the central axis.

10. The pickup tooling according to claim 8 or 9, wherein the pickup tooling comprises an adjustment mechanism and two pickup mechanisms, the adjustment mechanism is mounted on the base, the mounting seat is connected to the adjustment mechanism, and the adjustment mechanism is used for adjusting a distance between the mounting seats of the two pickup mechanisms in the second direction.

11. The pickup tooling according to any one of claim 10, wherein the adjustment mechanism comprises two sliders and a conveyor belt, the sliders are slidably connected to the base in the second direction, each slider is connected to a mounting seat, the conveyor belt has a first transmission part and a second transmission part that move in opposite directions in the second direction, and the two sliders are respectively connected to the first transmission part and the second transmission part.

12. The pickup tooling according to claim 11, wherein the adjustment mechanism further comprises a first pulley and a second pulley which are both rotatably connected to the base and are arranged in the second direction, and the conveyor belt is wound around the first pulley and the second pulley.

13. The pickup tooling according to any one of claims 1 to 12, wherein the pickup unit comprises:
a turning seat rotatably connected to the mounting seat about the central axis;
a clamping assembly comprising a first clamping portion and a second clamping portion arranged opposite to each other in a third direction; and
an adjustment assembly mounted on the turning seat, and the adjustment assembly being configured to adjust a distance between the first clamping portion and the second clamping portion in the third direction, so that the first clamping portion and the second clamping portion cooperate to clamp the workpiece.

14. The pickup tooling according to claim 13, wherein the adjustment assembly comprises a driving member and a first moving member, the driving member is mounted on the turning seat and has a first output end, the first moving member is connected to the first output end, and the driving member is configured to drive the first moving member to move in the third direction; and
in the third direction, the first clamping portion is movably arranged on the turning seat, and the first clamping portion is connected to the first moving member through an elastic member.

15. The pickup tooling according to claim 14, wherein the driving member has a second output end opposite to the first output end in the third direction; and
the second clamping portion is movably arranged on the turning seat in the third direction, and is connected to the second output end.

16. The pickup tooling according to claim 14 or 15, wherein the pickup mechanism comprises a plurality of clamping assemblies, and the first clamping portions of the plurality of clamping assemblies correspond to one first moving member.

17. The pickup tooling according to any one of claims 13 to 16, wherein in the third direction, a first cushion pad is arranged on one side of the first clamping portion facing the workpiece; and/or, in the third direction, a second cushion pad is arranged on one side of the second clamping portion facing the workpiece.

18. The pickup tooling according to any one of claims 13 to 17, wherein the third direction is perpendicular to the central axis.

19. The pickup tooling according to any one of claims 1 to 18, wherein the mounting seat is arranged on one side of the base away from the mounting portion in the first direction.
